# EUROPÄISCHE PATENTANMELDUNG

(11) **EP 1 044 868 A2**
(43) Veröffentlichungstag der Anmeldung: **18.10.2000**
(21) Anmeldenummer: 00107425.1
(22) Anmeldetag: 06.04.2000
(51) Int. Cl.: B62D 33/03, B62D 33/08

(54) **Ladeplattform eines Transportfahrzeugs**

(30) Priorität: 15.04.1999 US 292489
(71) Anmelder: DEERE & COMPANY, Moline, Illinois 61265-8098 (US)
(72) Erfinder: Shambeau, Thomas Allan, Beaver Dam, WI 53916 (US); Hansen, Loren Fredrick, Lincoln, NE 68505 (US)
(74) Vertreter: Magin, Ludwig Bernhard

(57) **Zusammenfassung**

Eine Ladeplattform (18) eines Transportfahrzeugs (10) ist mit einer feststehenden vorderen und wenigstens einer vertikal schwenkbaren seitlichen Wand (24) und (22) versehen. Die Seitenwand (22) kann in eine im wesentlichen waagrechte Stellung gebracht werden, in der sie eine Ebene mit einem Boden (20) bildet. In der horizontalen Stellung wird die seitliche Wand (22) von einem Sicherungszusammenbau (80) gehalten, der eine Lasche (82) mit einer Gleitbahn (86) und einem Gleitelement (84) enthält. Die Gleitbahn (86) enthält zwei Anschläge (88), die das Gleitelement (84) in der jeweiligen Endstellung der Lasche (82) arretieren, so daß die seitliche Wand (22) nicht nach oben bewegt werden kann.

## Beschreibung

Die Erfindung betrifft eine Ladeplattform eines Transportfahrzeugs mit einem Boden, wenigstens einer stehenden Wand und wenigstens einer schwenkbaren Wand, wobei zwischen der stehenden und der schwenkbaren Wand ein Sicherungszusammenbau vorgesehen ist, um die schwenkbare Wand gegen eine Schwenkbewegung in einer Richtung zu sichern.

Die US-A-2,278,450, deren Offenbarung in die Offenbarung dieser Patentanmeldung mit einbezogen wird, offenbart ein geländetaugliches Transportfahrzeug mit mehreren Wänden, die um horizontale Achsen geklappt und auf eine Stütze aufgelegt werden können, so daß sie eine größere Ladefläche erzeugen. Nachteilig hierbei ist, daß die Stützen dann störend überstehen, wenn die Wand eine aufrechte Stellung einnimmt, und daß die Wände bei der Fahrt auf unebenem Gelände nach oben schwenken können, was zu Geräuschen, Verschleiß und Verletzung führen könnte.

Bei einer Ausführung gemäß der US-A-4,580,828 wird eine Heckklappe in einer Ladestellung gegen eine Abwärtsbewegung dadurch gehalten, daß zwischen ihren außenliegenden Eckbereichen und den oberen Eckbereichen zweier Seitenwände ein zweiteiliges Gestänge vorgesehen ist. Dieses Gestänge ist insofern nachteilig, als es in seiner gestreckten Lage zusammengeschoben werden kann, so daß die Heckklappe bei der Fahrt auf unebenem Gelände unbeabsichtigt nach oben schwenken kann.

Das der Erfindung zugrunde liegende Problem wird darin gesehen, eine Ladeplattform vorzuschlagen, die selbst bei der Fahrt auf unebenem Gelände eine sichere Auflagefläche bietet.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann sich die bewegliche Wand z. B. bei der Fahrt auf unebenem Gelände nicht aus ihrer vorgesehenen Stellung bewegen, sondern das Gleitelement liegt an dem zugeordneten Anschlag an. Hierdurch wird nicht nur eine erhöhte Sicherheit sondern auch eine längere Lebensdauer der einbezogenen Teile erreicht, weil es nicht zu ständigen Bewegungen und Stößen kommt, die Verschleiß hervorrufen würden.

Zwar könnte die Gleitbahn und das Gleitelement in verschiedenster Weise gebildet werden, z. B. aus einer Schiene und einer darauf abwälzenden Rolle; herstellungstechnisch einfacher und in der Verbindung sicherer ist die Verwirklichung in einer Schlitz-Schlitzfolgeelement-Technik. Diese Ausführung sorgt für einen steten Eingriff des Gleitelements in der Gleitbahn.

Anschläge könnten auf verschiedene Weise ausgebildet werden, z. B. als Maschinenelemente, die in die Gleitbahn eingefügt und gesichert werden. Als besonders vorteilhaft erweist sich jedoch eine spezielle Formgebung der Gleitbahn, da diese bereits bei der Gestaltung und Herstellung der Gleitbahn verwirklicht werden kann, so daß keine zusätzlichen Herstellungskosten entstehen.

Wenn auch in den meisten Fällen das Gewicht der Lasche bereits dazu führen wird, daß die Gleitbahn im Fall das Gleitelement übergreifen wird, so ist es doch sicherer und schneller, wenn die Lasche von einer Feder in Eingriff mit dem Gleitelement gebracht wird.

Eine plattenförmige Ausbildung der Lasche führt zu einer geringen Bautiefe, so daß der Sicherungszusammenbau auch unter beengten Verhältnissen verwendet werden kann.

Eine mit einem gekrümmten Bereich versehene Lasche ist leichter zu erfassen, da der der gekrümmte bzw. abgekröpfte Bereich als Griff benutzt werden kann.

Eine besonders herstellungsfreundliche Art, Anschläge zu erzeugen, wird durch die Art der Führung der Gleitbahn erreicht. Die Gleitbahn kann an ihren Enden z. B. rechtwinklig abgekröpft werden, so daß das Gleitelement sicher gehalten ist.

Die Zuverlässigkeit und Einsatzbarkeit geländegängiger Fahrzeuge, z. B. sogenannte Allzwecktransporter, wird dadurch gesteigert, daß sie eine Ladeplattform aufweisen, bei der es sich bei der stehenden Wand um eine auf einem Rahmen befestigte vordere Wand und bei der beweglichen Wand um eine oder mehrere Seitenwände handelt. Dabei legt sich das Gleitelement sowohl in einer ausgeklappten im wesentlichen mit dem Boden ebenen Stellung als auch in einer aufrechten und zu dem Boden senkrechten Stellung der beweglichen Wand an dem jeweiligen Anschlag an.

In der Zeichnung ist ein nachfolgend näher beschriebenes Ausführungsbeispiel der Erfindung dargestellt. Es zeigt:
- Fig. 1: ein Transportfahrzeug in einer perspektivischen Ansicht von vorne links,
- Fig. 2: eine Ladeplattform des Transportfahrzeugs in einer perspektivischen Ansicht von hinten links,
- Fig. 3: eine Draufsicht auf das Transportfahrzeug nach Figur 1, wobei die durchgezogenen Linien die Ladeplattform in einem geschlossenen und die unterbrochenen Linien in einem geöffneten Zustand zeigen,
- Fig. 4: die Ladeplattform in einer Ansicht von unten und hinten mit einem Schwenkarm zum Stützen einer rückwärtigen Wand in einer Reservestellung,
- Fig. 5: die Ladeplattform in einer Ansicht von hinten und unten, wobei der Schwenkarm in einer Stützstellung geschwenkt ist,
- Fig. 6: ein vertikaler Schnitt durch den Schwenkarm und einen Teil der auf ihm auf liegenden Wand,
- Fig. 7: ein Sicherungszusammenbau zwischen einer vorderen und einer seitlichen Wand, wobei die seitliche Wand ihre geschlossene Stellung einnimmt, und
- Fig. 8: den Sicherungszusammenbau aus Figur 7, wobei die seitliche Wand ihre geöffnete Stellung einnimmt.

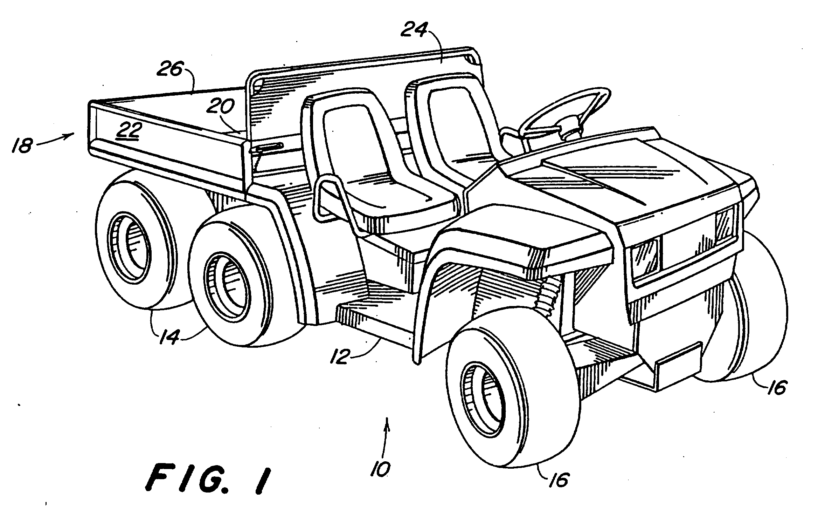

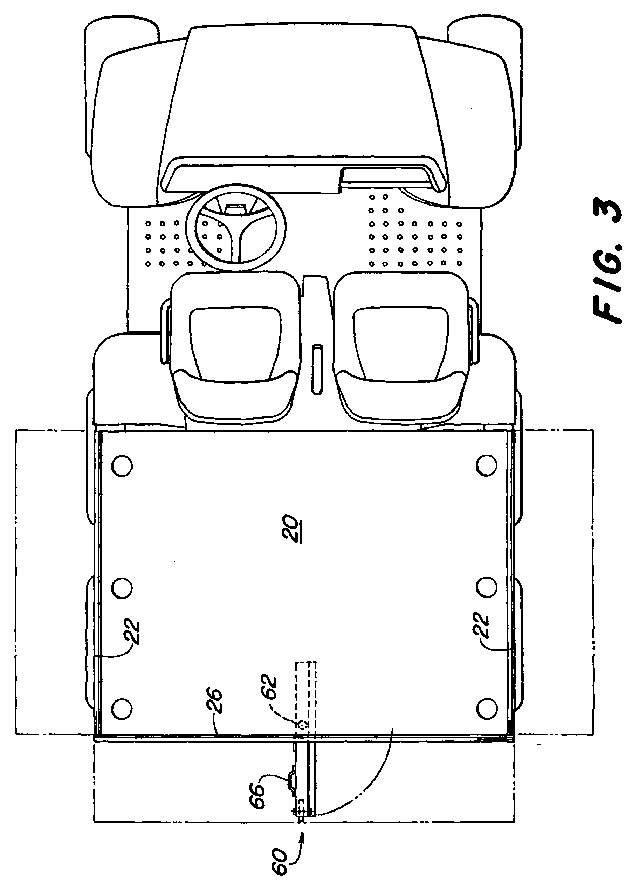

Figur 1 zeigt ein Transportfahrzeug 10 zum Befördern von Geräten und Werkzeugen mit einem Rahmen 12, der von vier angetriebenen Rädern 14 (in Figur 1 sind zwei davon gezeigt) und einem Paar lenkbarer vorderer Räder 16 getragen wird. Oberhalb der angetriebenen Räder 14 befindet sich eine Ladeplattform 18, die von dem Rahmen 12 getragen wird. Die Ladeplattform 18 enthält eine horizontalen Platte oder Boden 20 und vertikale rechte und linke seitliche Wände 22, eine vordere Wand 24 und eine rückwärtige Wand 26. Die Wand 26 bildet die rückwärtige Wand der Ladeplattform 18 und ist in einer zu beschreibenden Art und Weise so angeordnet, daß sie die Öffnung zwischen den rückwärtigen Kanten des Bodens 20 und der seitlichen Wände 22 verschließen kann. Die seitlichen Wände 22 sind ebenfalls in einer zu beschreibenden Art und Weise derart angeordnet, daß sie um sich längs erstreckende waagrechte Achsen schwenken können. Auf diese Weise können die Wände 22 und die Wand 26 von einer geschlossenen, aufrechten Stellung in eine offene, zurückgekippte Stellung geschwenkt werden, in der sie tatsächlich zu einer Ausdehnung des Bodens 20 werden, und die Ladeplattform 18 kann auf diese Weise in eine flache Platte umgewandelt werden, wie dies in Figur 3 zu sehen ist.

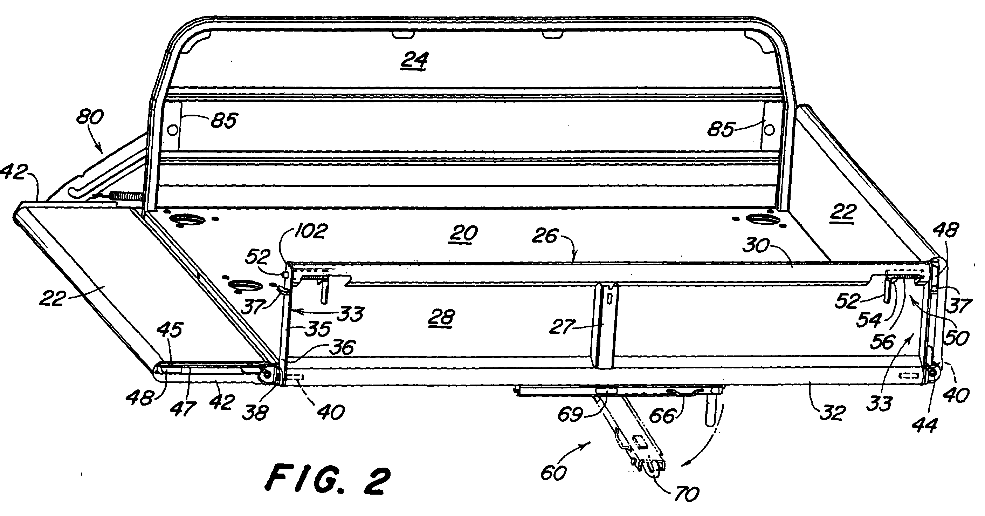

Gemäß Figur 2 enthält die Rückwand 26 - ausgehend von ihrer aufrechten Stellung - eine aufrechte Platte 28 mit einer umgebogenen oberen Kante 30 und einer umgebogenen unteren Kante 32. Ein Verriegelungsbereich 27 in der Form eines offenendigen U-Kanals ist an die aufrechte Platte 28 angeschweißt. Gegenüberliegende Enden 33 der rückwärtigen Wand 26 sind jeweils durch eine Endplatte 35 der Wand 26 bestimmt, die einen hauptsächlichen geraden Abschnitt 36 und einen Halter 37 zum Halten der seitlichen Wand 22 aufweist. Ein Halter 38 der Wand 26 ist an dem Boden 20 befestigt und nimmt einen Schwenkbolzen 40 auf, der sich des weiteren durch eine Öffnung in der Endplatte 35 der Wand 26 erstreckt. Der Schwenkbolzen 40 wird durch eine Schraubverbindung mit einer Mutter, die an die Innenseite der Endplatte 35 geschweißt ist, und die Anlage des Kopfes des Schwenkbolzens 40 an dem Halter 38 gehalten. Die Schwenkbolzen 40 an jedem Ende der Rückwand 26 stehen für eine im allgemeinen horizontale Achse, um die die Wand 26 schwenken kann. Die rückwärtige Wand 26 enthält auch eine Verriegelung 50 an jedem Ende 33, die eine L-förmige Stange 52 aufweist, die für eine axiale Bewegung eingeschlossen in einem Loch in einem Halter 54 geführt ist, der an der Platte 28 befestigt ist und sich von dieser nach hinten erstreckt, eine an die Innenseite der Endplatte 35 angeschweißte Büchse und eine ausgerichtete Öffnung in der Endplatte 35 der Wand 26. Eine Feder 56 ist zwischen dem Halter 54 und einem Bolzen gefangen, der sich durch eine Querbohrung in der Stange 52 derart erstreckt, daß die Stange 52 in eine Stellung vorgespannt wird, in der sich ein Ende der Stange 52 nach außen über die Endplatte 35 der Wand 26 erstreckt.

Wie es in den Figuren 2 bis 6 gezeigt ist, ist unter dem Boden 20 ein Schwenkarm 60 an den Rahmen 12 des Transportfahrzeugs 10 montiert. Der Schwenkarm 60 ist mittels einer Schraube 62 an einem Halter 63 an den Rahmen 12 derart befestigt, daß der Schwenkarm 60 um eine im allgemeinen vertikale Achse schwenken kann, und zwar zwischen einer Reservestellung, in der sich der Schwenkarm 60 seitlich erstreckt und sich unterhalb des Bodens 20 befindet, und einer Stützstellung, in der sich der Schwenkarm 60 längs erstreckt und sich ein Verriegelungsabschnitt 64 nach hinten über die rückwärtige Wand 26 hinaus erstreckt, wenn man von deren geschlossener Stellung ausgeht. Figur 3 zeigt den Schwenkarm 60 in seiner Stützstellung und die diesbezüglichen Stellungen der rückwärtigen Wand 26 und der seitlichen Wände 20 in deren geschlossenen und offenen (dargestellt durch die unterbrochenen Linien) Stellungen. Der Schwenkarm 60 ist vorzugsweise mit einem Griff 66 versehen, der von einer Bedienungsperson ergriffen werden kann, um den Schwenkarm 60 zwischen seiner Reserve- und seiner Stützstellung zu schwenken. Der Halter 63 enthält einen Schwenkanschlag 68, der für eine Anlage an dem Schwenkarm 60 sowohl in der Reserve- wie auch in der Stützstellung des Schwenkarme 60 sorgt, so daß die Bedienungsperson den Schwenkarm 60 auf einfache Weise zwischen diesen Stellungen bewegen kann.

Weil eine rückwärtige längliche Seite 101 des Schwenkarms 60 eben oder nahezu eben mit dem rückwärtigen Ende des Transportfahrzeugs 10 ist, wenn sich der Schwenkarm 60 in seiner Reservestellung befindet, kann die rückwärtige Wand 26 mit dem Schwenkarm 60 in Berührung kommen, wenn die Wand 26 nach unten in eine vertikale Stellung oder darüber hinaus geschwenkt ist, wobei darüber hinaus bedeutet, über die geöffnete Stellung, in der sie von dem Schwenkarm 60 gestützt wird, hinaus. Es mag daher wünschenswert sein, einen Gummiblock 69 auf die Seite 101 aufzubringen, um Stöße zu absorbieren und Geräusche zu mindern, die ansonsten entstehen würden, wenn die rückwärtige Wand 26 auf den Schwenkarm 60 aufschlägt (insbesondere, wenn beide aus Metall bestehen). In einem solchen Fall wäre es wünschenswert, sicherzustellen, daß der Abstand, um den der Griff 66 von dem Schwenkarm 60 absteht, geringer ist, als der Abstand, um den der Verriegelungsbereich 27 über die aufrechte Platte 28 übersteht, so daß der erste Kontakt zwischen der Wand 26 und dem Schwenkarm 60 zwischen dem Gummiblock 69 und dem Verriegelungsbereich 27 erfolgt, anstatt zwischen dem Griff 66 und der Platte 28.

Ein Verriegelungshaken 70 ist an dem entfernten Ende 72 des Schwenkarms 60 mittels einer Schraube 74 montiert, die als Drehachse für den Verriegelungshaken 70 dient. Der Verriegelungshaken 70 ist an eine Büchse 71 angeschweißt, die die Schraube 74 umgibt, so daß der Verriegelungshaken 70 in der gewünschten Stellung auf der Schraube 74 gehalten werden kann.

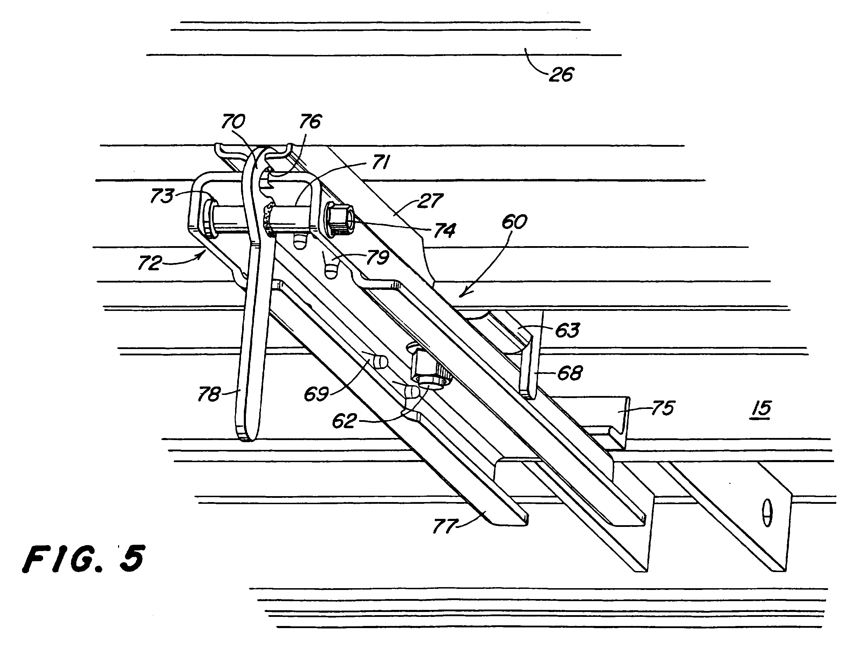

Scheiben 73 aus Nylon sind an jedem Ende der Büchse 71 vorgesehen, um eine Reibung aufzubauen, die erforderlich ist, um ein gewünschtes Maß an Kraft zu fordern, um den Verriegelungshaken 70 zu schwenken. Ein Griff 78 erstreckt sich von dem Verriegelungshaken 70 weg, so daß eine Bedienungsperson den Verriegelungshaken 70 leichter drehen kann, um die Wand 26 in der geöffneten Stellung zu verriegeln. Ein Stützhalter 75 ist an eine Schiene 15 des Rahmens 12 der Ladeplattform 18 einem nahen Ende 77 des Schwenkarme 60 benachbart montiert, wenn sich der Schwenkarm 60 in seiner Stützstellung (Fig. 5) befindet, um eine Stütze für das nahe Ende 77 des Schwenkarms 60 zu bieten, um die Biegemomente zu reduzieren, die es von der Schraube 62 aus gesehen gibt, wenn der Schwenkarm 60 durch die Wand 26 an seinem äußeren Ende 72 belastet wird.

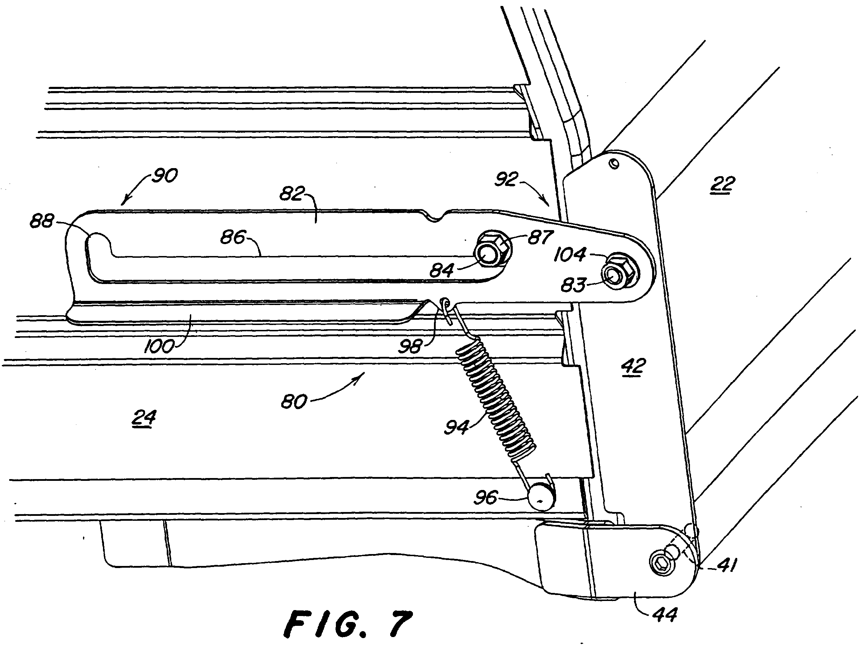

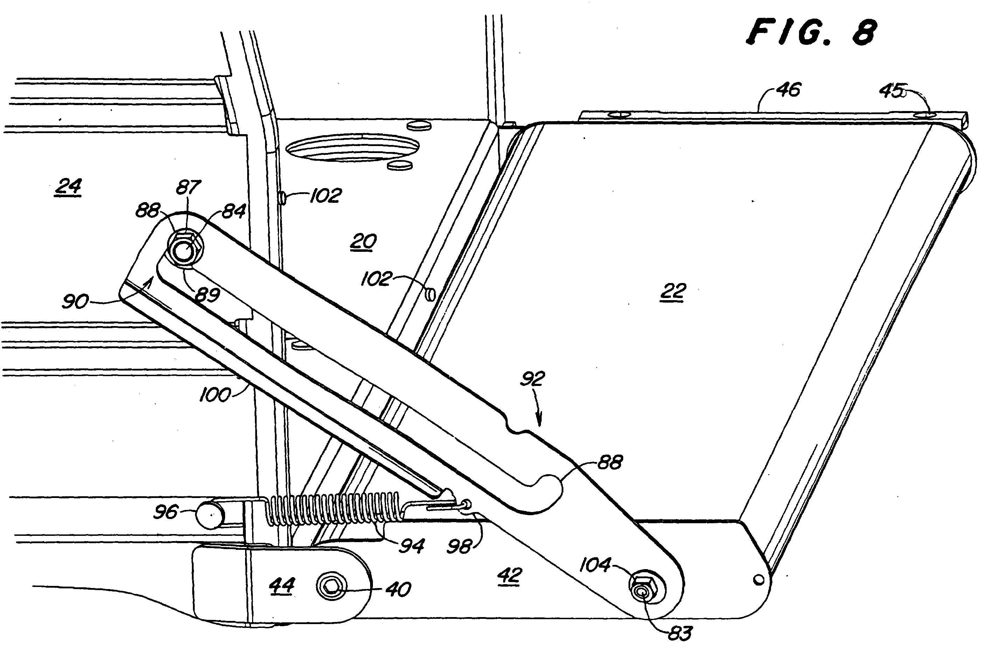

Wenn man nun auf die Figuren 7 und 8 schaut, kann man sehen, daß jede der seitlichen Wände 22 an gegenüberliegenden vorderen und rückwärtigen Enden Endplatten 42 aufweist, die Löcher zur Aufnahme des Schwenkbolzens 41 enthält, die ebenfalls von Haltern 44 für die Wände 22 aufgenommen werden, wobei die Halter 44 in bezug auf den Boden 20 festliegen. Die Schwenkbolzen 41 werden durch eine Schraubverbindung mit geschweißten Muttern in ihrer Stellung gehalten, wie die Schwenkbolzen 40 für die rückwärtige Wand 26. Die Schwenkbolzen 41 an jedem Ende der Wände 22 stellen in gleicher Weise ein Paar in Querrichtung voneinander beabstandeter und im allgemeinen horizontaler Achsen dar, um die die seitlichen Wände 22 schwenken können. Die Endplatten 42 an den rückwärtigen Enden der Wände 22 enthalten jeweils einen Halteflansch 46, der an diese angeschweißt ist. Wie dies in Figur 2 zu sehen ist, enthält der Halteflansch 46 einen Hauptabschnitt 47, der sich von der Endplatte 42 der seitlichen Wand 22 aus nach hinten erstreckt, und gebogene Abschnitte 48, die sich von dem Hauptabschnitt 47 aus nach hinten und außen erstrecken. Der Halteflansch 46 ist mit einem Loch 45 für einen Zweck versehen, der zu beschreiben ist.

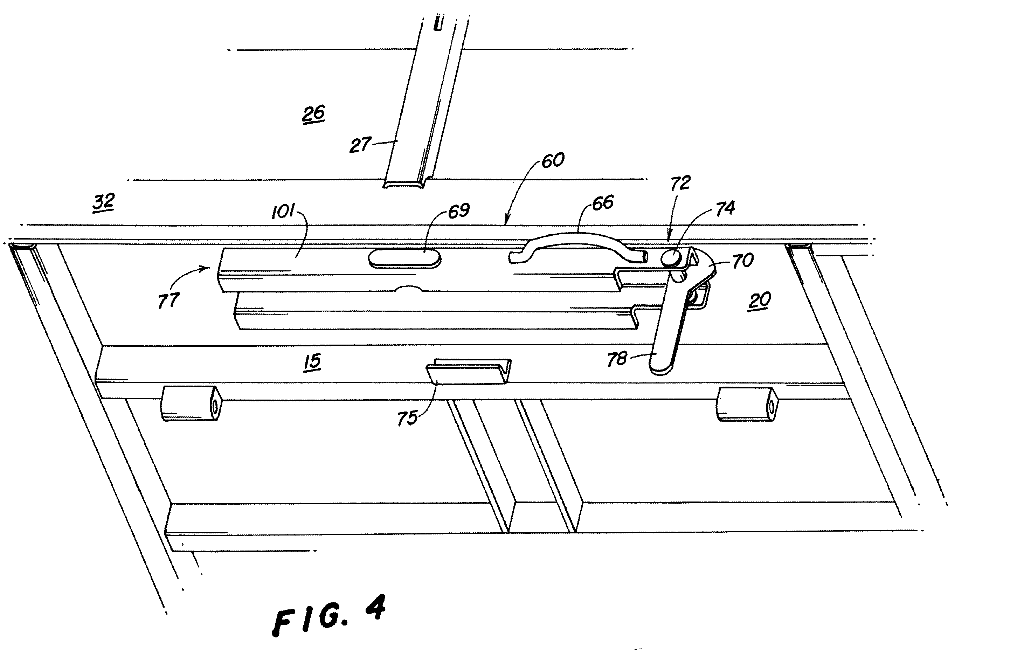

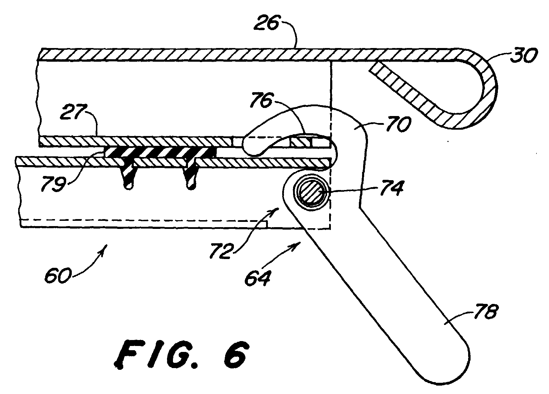

Gemäß den Figuren 2, 4 und 5 ist zu sehen, daß der Schwenkarm 60 aus seiner Reservestellung (Fig. 4) in seine Stützstellung (Fig. 5) geschwenkt wird, so daß er sich nach hinten über die Wand 26 hinaus erstreckt - ausgehend von deren geschlossener Stellung - wenn es gewünscht ist, die Wand 26 zu öffnen und in der geöffneten Stellung zu verriegeln. Um die Verriegelung 50 zu lösen, können die L-förmigen Stangen 52 nach innen gleiten (gegen die Kraft der Feder), so daß die Enden der Stangen 52 von dem Eingriff mit den Löchern in den Halteflanschen 46 der Seitenwände 22 entfernt werden. Dann kann die Wand 26 nach unten geschwenkt werden. Gemäß den Figuren 5 bis 6 befindet sich der Verriegelungsabschnitt 27 in Anlage an der Oberseite des Schwenkarms 60, wenn die rückwärtige Wand 26 eine im wesentlichen horizontale Ausrichtung (ihre geöffnete Stellung) einnimmt. Es ist somit ersichtlich, daß der Verriegelungsabschnitt 27 die Oberfläche der rückwärtigen Wand 26 darstellt, die direkt von dem Schwenkarm 60 gestützt wird. Der Verriegelungsabschnitt 27 erstreckt sich von der aufrechten Platte 28 der Wand 26, um sicherzustellen, daß die Rückwand 26 an dem Boden 20 ausgerichtet ist, um eine Verlängerung von diesem zu bilden, wenn sich die rückwärtige Wand 26 in ihrer geöffneten Stellung befindet und von dem Schwenkarm 60 gestützt wird. Die Wand 26 kann dann infolge einer Bewegung des Griffs 78, was eine Drehung des Verriegelungshakens 70 in das offene Ende des Verriegelungsabschnitts 27 bewirkt, in ihrer geöffneten Stellung gesichert werden. Der Verriegelungshaken 70 erfaßt dann die Unterseite des Verriegelungsabschnitts 27. Eine innere Kontur 76 des Verriegelungshakens 70 verläuft nicht mit einem konstanten Radius um die Schraube 74, so daß der Verriegelungshaken 70 als ein Nocken wirkt, der die Rückwand 26 - über ihren Verriegelungsabschnitt 27 - und den Schwenkarm 60 mit zunehmender Kraft zusammenklemmt, wenn der Verriegelungshaken 70 geschwenkt wird. Um den Verriegelungshaken 70 zu entriegeln, kann er durch eine Öffnung in dem Verriegelungsabechnitt 27 geschwenkt werden und an der Oberseite des Schwenkarms 60 (sh. Figur 6) anliegen. Vorzugsweise ist ein Dämpfungsteil 79, bestehend aus einem nachgiebigen Material, z. B. wie aus Gummi, zwischen dem Verriegelungsabschnitt 27 und dem Schwenkarm 60 vorgesehen, der hier auf der Oberseite des Schwenkarms 60 befestigt gezeigt ist, um Vibrationen zu verringern und dabei zu helfen, daß ein Rütteln in der Verbindung zwischen der rückwärtigen Wand 26 und dem Schwenkarm 60 unterbleibt, während sich das Transportfahrzeug 10 über das Gelände bewegt, wobei das Rütteln sowohl als ein Zeichen für Geräusche als auch für Instabilität der Verbindung steht.

Um die rückwärtige Wand 26 zu schließen, wird sie mittels einer Drehung des Verriegelungshakens 70 von dem Schwenkarm 60 getrennt. Wie man es auf der rechten Seite der Figur 2 sehen kann, kann die rückwärtige Wand 26 dann nach oben geschwenkt werden, bis die L-förmigen Stangen 52, die sich von dieser weg erstrecken, in Anlage an den gebogenen Abschnitten 48 der Halteflansche 46 der seitlichen Wände 22 gelangen. Eine weitere Bewegung der Wand 26 bewirkt, daß die Stangen 52 aufgrund der gebogenen Abschnitte 48 der Halteflansche 46 nach innen gleiten und nachgiebig belastet werden, wenn die Feder 56 zusammengedrückt wird. Wenn die rückwärtige Wand 26 ihre geschlossene, aufrechte Stellung erreicht, sind die Stangen 52 an den korrespondierenden Löchern 45 in den Seiten der Halteflansche 46 ausgerichtet. Die L-förmigen Stangen 52 sind durch die Kraft der Feder 56 vorgespannt, so daß die Enden der Stangen 52 in jedem der Löcher 45 in dem Halteflansch 46 untergebracht werden, was eine weitere Schwenkbewegung der Wand 26 verhindert. Zur gleichen Zeit wird eine nach innen gerichtete Bewegung des Halters 37 zum Halten der Wand 22 den Hauptabschnitt 47 des Halteflansches 46 erfassen, so daß die seitliche Wand 22 nicht nach außen schwenken kann. Die Anlage der Innenseite der seitlichen Wand 22 an der rückwärtigen Wand 26 und der Vorderwand 24, wie auch ein vorderer Sicherungszusammenbau 80 halten die Wand 22 davon ab, nach innen zu schwenken. Es ist daher ersichtlich, daß die seitlichen Wände 22 und die rückwärtige Wand 26 als eine gegenseitige Stütze ineinander greifen, wenn sie sich in ihrer geschlossenen, aufrechten Stellung befinden. Wenn die rückwärtige Wand 26 geschlossen ist, sollte der Schwenkarm 60 in seine Reservestellung geschwenkt werden.

Die seitlichen Wände 22 werden durch den vorderen Sicherungszusammenbau 80 getragen und in ihrer offenen und geschlossenen Stellung an dem vorderen Ende jeder Seitenwand 22 (sh. Fig. 7 - 8) gehalten. Der vordere Sicherungszusammenbau 80 der linken Wand 22 ist in den Figuren 7 - 8 gezeigt. Der vordere Sicherungszusammenbau 80 der rechten Wand 22 ist von spiegelbildlicher Ausführung. Der vordere Sicherungszusammenbau 80 enthält jeweils eine Lasche 82, die an einem Ende der Endplatte 42 der Wand 22 mittels einer Schraube 83 und einer Mutter 104 schwenkbar gesichert ist. Die Schraube 83 wird von einer Büchse umgeben, die es ermöglicht, daß Kraft zwischen der Mutter 104 und der Endplatte 42 übertragen wird, so daß eine stramme Verbindung erhalten werden kann, ohne daß eine Schwenkbewegung der Lasche 82 um die Schraube 83 unterbunden würde. Ein als Schraube ausgebildetes Gleitelement 84 ist durch eine Öffnung in der vorderen Wand 24 und eine entsprechende Öffnung in einer in Figur 2 gezeigten Verstärkungsplatte 85 montiert, um die Stärke der vorderen Wand 24 wirksam zu erhöhen. Das Gleitelement 84 und eine Büchse, die das Gleitelement 84 umgibt, sind mittels einer Bundmutter 87 in einer als Schlitz ausgebildeten Gleitbahn 86 jeder Lasche 82 gefangen, so daß die Lasche 82 gegenüber dem Gleitelement 84 gleiten kann und das Gleitelement 84 der Gleitführung 86 folgt. Es mag wünschenswert sein, das Gleitelement 84 mit einer oder mehreren Scheiben 89 zu versehen, um als Lagerfläche für die Lasche 82 zu dienen. Die Scheiben 89 dienen dazu, die Lasche 82 auf Abstand zu der vorderen Wand 24 zu halten, um die Lasche 82 im wesentlichen parallel zu der Wand 24 zu halten, weil die Endplatte 42 vorzugsweise so gestaltet ist, daß sie die vordere Wand 24 überlappen, um der Ladeplattform 18 eine zusätzliche Festigkeit zu verleihen, wenn sich die seitlichen Wände 22 in ihrer geschlossenen aufrechten Stellung befinden. Die Scheiben 89 können aus einem Material mit geringer Reibung hergestellt sein, so daß die relative Gleitbewegung zwischen dem Gleitelement 84 und der Lasche 82 eine geringe Anstrengung erfordert. Die Gleitbahn 82 weist an den inneren und äußeren Enden 90, 92 jeder Gleitbahn 82 einen nach oben gebogenen Abschnitt oder Anschlag 88 auf, die als Arretierung wirken, von denen jeder einer offenen und einer geschlossenen Stellung der Seitenwand 22 zugeordnet ist. Die Öffnungen in der vorderen Wand 24 und der Verstärkungsplatte 85 sind vorzugsweise länglich ausgebildet, so daß das Gleitelement 84 zum Ausgleich von Fertigungstoleranzen in zugeordneten Teilen verstellt werden kann. Das Gleitelement 84 kann gelöst, die seitliche Wand 22 in strammer Anlage an der Außenseite der vorderen Wand 24 nach oben gebracht und das Gleitelement 84 wieder angezogen werden. Diese Einstellung stellt sicher, daß die geschlossene aufrechte Stellung der seitlichen Wand 22 in einer gewünschten Beziehung zwischen der seitlichen Wand 22 und der vorderen Wand 24 steht.

Eine Feder 94 ist zwischen einen Federhalter, wie etwa einen Niet 96, und einen Zungenabschnitt 98 der Lasche 82 eingefügt, wobei der Niet 96 an der vorderen Wand 24 angebracht gezeigt ist. Die Feder 94 spannt die Lasche 82 nach unten, so daß mangels einer von einer Bedienungsperson aufgebrachten entgegenwirkenden Kraft das Gleitelement 84 in einen der nach oben gewandten Anschläge 88 eingefügt wird, und die seitliche Wand 22 wird in der offenen oder geschlossenen Stellung gehalten, die dem betreffenden nach oben gewandten Anschlag 88, in dem das Gleitelement 84 sitzt, zugeordnet ist. Die Lasche 82 ist mit einem nach außen gebogenen Bereich 100 in der Art einer Lippe gezeigt, so daß eine Bedienungsperson die Lasche 82 leichter ergreifen kann, um sie gegen die Kraft der Feder 94 anzuheben.

Figur 7 zeigt den vorderen Sicherungszusammenbau 80 in Verbindung mit der linken Wand 22 des Transportfahrzeugs 10, wobei die Wand 22 in ihrer geschlossenen Stellung gezeigt ist. Das Gleitelement 84 ist in den nach oben gewandten Anschlag 88 der Lasche 82 an dem äußeren Ende 92 der Gleitbahn 82 eingesetzt, was eine Schwenkbewegung der seitlichen Wand 22 verhindert.

Eine Bedienungsperson kann die seitliche Wand 22 öffnen - wenn sich die rückwärtige Wand 26 in ihrer geöffneten Stellung befindet - indem sie die Lasche 82 anhebt, um die Kraft der Feder 94 zu überbieten und das Gleitelement 84 aus dem Eingriff mit dem nach oben gebogenen Anschlag 88 zu bringen, so daß die Lasche 82 der Länge ihrer Gleitbahn 86 entlanggleiten kann, wenn die Wand 22 nach unten schwenkt. Wenn die Wand 22 ihre geöffnete Stellung erreicht (gezeigt in Figur 8), trifft das Gleitelement 84 auf das innere Ende 90 der Gleitbahn 86, wo die Kraft der Feder 94 die Lasche 82 wiederum nach unten spannt, so daß das Gleitelement 84 in dem nach oben gedrehten Anschlag 88 an dem inneren Ende 90 der Gleitbahn 86 gefangen wird.

Die Seitenwand 22 kann dadurch geschlossen werden, daß die Lasche 82 angehoben wird, um das Gleitelement 84 aus dem nach oben gewandten Anschlag 88 an dem inneren Ende 90 der Gleitbahn 86 zu lösen. Die seitliche Wand 22 kann dann nach oben geschwenkt werden, bis sie ihre geschlossene Stellung erreicht, in der das Gleitelement 84 auf das äußere Ende 92 der Gleitbahn 86 trifft. Die Feder 94 wird dann die Lasche 82 nach unten ziehen, so daß sich das Gleitelement 84 in den nach oben gerichteten Anschlag 88 an dem äußeren Ende 92 der Gleitbahn 86 setzt.

Um die Ladeplattform 18 in einen flachen Boden zu verwandeln (Fig. 2), wird der Schwenkarm 60 in seine Stützstellung geschwenkt und die rückwärtige Wand 26 wird in der zuvor beschriebenen Weise geöffnet und in ihrer offenen Stellung mit dem Schwenkarm 60 verriegelt. Der vordere Sicherungszusammenbau 80 kann dann in der zuvor beschriebenen Weise gehandhabt werden, so daß die seitlichen Wände 22 in ihre geöffnete Stellung gebracht werden können und dabei den Umbau komplettieren. Die Ladeplattform 18 kann wieder zurückgebildet werden, indem zuerst die seitlichen Wände 22 und dann die rückwärtige Wand 26 in der hierin beschriebenen Weise geschlossen werden. Es kann wünschenswert sein, Puffer 102, wie z. B. Nylonstopfen, auf dem Umfang des Bodens 20 und zwischen der rückwärtigen und der vorderen Wand 26 und 24 anzubringen. Die Puffer 102 dienen der Verringerung der Geräusche, wenn sich die vordere und die rückwärtige Wand 22 und 26 in ihrer geschlossenen, aufrechten Stellung befinden.

Obwohl die Erfindung in bezug auf das dargestellte Ausführungsbeispiel beschrieben ist, werden Fachleute verstehen, daß die Erfindung in der vorbeschriebenen Form vorteilhaft sein kann, wenn sie für den Gebrauch in anderen Anwendungen geändert wird. Zum Beispiel kann die Gleitbahn 86 in der Lasche 82 wie auch verschiedene andere Teile dieser Führung geändert werden, z. B. als ein Paar von hochgestellten Schienen, und das Gleitelement kann als eine Rolle oder ein anderes Gleitelement ausgebildet werden. Die vorliegende Erfindung sollte nicht durch die vorstehende Beschreibung sondern nur durch die folgenden Ansprüche eingeschränkt werden.

## Patentansprüche

1. Ladeplattform (18) eines Transportfahrzeugs (10) mit einem Boden (20), wenigstens einer stehenden Wand (24) und wenigstens einer schwenkbaren Wand (22), wobei zwischen der stehenden und der schwenkbaren Wand (24) und (22) ein Sicherungszusammenbau (80) vorgesehen ist, um die schwenkbare Wand (22) gegen eine Schwenkbewegung in einer Richtung zu sichern, dadurch gekennzeichnet, daß der Sicherungszusammenbau (80) eine Lasche (82) mit einer Gleitbahn (86) aufweist, wobei die Lasche (82) an einer der Wände (24, 22) schwenkbar angebracht ist, die Gleitbahn (86) von einem Gleitelement (84) durchdrungen wird, das Gleitelement (84) an der anderen Wand (24, 22) befestigt ist und die Gleitbahn (86) zwei Anschläge (88) aufweist, wobei das Gleitelement (84) bei einer Bewegung der Lasche (82) aufgrund einer Bewegung der schwenkbaren Wand (22) in der anderen Richtung an einem der Anschläge (88) zur Anlage kommt.

2. Ladeplattform nach Anspruch 1, dadurch gekennzeichnet, daß die Gleitbahn (86) als ein Schlitz und das Gleitelement (84) als ein Schlitzfolgeelement, insbesondere als eine Schraube, ausgebildet ist, das die Gleitbahn (86) durchsetzt.

3. Ladeplattform nach Anspruch 1 oder 2, dadurch gekennzeichnet, daß die Anschläge (88) durch Nasen oder Aussparungen an gegenuberliegenden Enden der Gleitbahn (86) gebildet werden.

4. Ladeplattform nach einem oder mehreren der vorherigen Ansprüche, gekennzeichnet durch eine an die Lasche (82) angreifende Feder (94), die die Lasche (82) mit ihrer Gleitbahn (86) zur Anlage des Gleitelements (84) an einem der Anschläge (88) vorspannt.

5. Ladeplattform nach einem oder mehreren der vorherigen Ansprüche, dadurch gekennzeichnet, daß die Lasche (82) plattenförmig ausgebildet ist.

6. Ladeplattform nach einem oder mehreren der vorherigen Ansprüche, dadurch gekennzeichnet, daß die Lasche (82) mit einem abgekrümmten Bereich (100) versehen ist.

7. Ladeplattform nach einem oder mehreren der vorherigen Ansprüche, dadurch gekennzeichnet, daß die Anschläge (88) durch die insbesondere rechtwinklige Führung der Gleitbahn (86) in deren Endbereich gebildet werden.

8. Ladeplattform nach einem oder mehreren der vorherigen Ansprüche, dadurch gekennzeichnet, daß es sich bei der stehenden Wand (24) um eine auf einem Rahmen (12) befestigte vordere Wand (24) und bei der beweglichen Wand (22) um eine Seitenwand handelt, wobei sich das Gleitelement (84) sowohl in einer ausgeklappten im wesentlichen mit dem Boden (20) ebenen Stellung als auch in einer aufrechten und zu dem Boden (20) senkrechten Stellung der beweglichen Wand (22) an dem jeweiligen Anschlag (90, 92) anlegt.
